# EUROPÄISCHE PATENTSCHRIFT

(11) **EP 4 409 101 B1**
(45) Veröffentlichungstag und Bekanntmachung des Hinweises auf die Patenterteilung: **08.10.2025**
(21) Anmeldenummer: 22826330.7
(22) Anmeldetag: 01.12.2022
(51) Int. Cl.: E05F 15/603

(54) **BREMSEINRICHTUNG**
BRAKING DEVICE
DISPOSITIF DE FREINAGE

(30) Priorität: 02.12.2021 DE 202021106598 U
(43) Veröffentlichungstag der Anmeldung: 07.08.2024
(73) Patentinhaber: Edscha Engineering GmbH, 42855 Remscheid (DE)
(72) Erfinder: GUTIERREZ-FERNANDEZ, Jose-Manuel, 39718 Sobremazas (ES); BALS, Jochen, 42855 Remscheid (DE); OBRIG, Matthias, 42855 Remscheid (DE)
(74) Vertreter: IPrime Bonnekamp Sparing Patentanwaltsgesellschaft mbH
(86) Internationale Anmeldenummer: PCT/DE2022/100902
(87) Internationale Veröffentlichungsnummer: WO 2023/098946

(56) Entgegenhaltungen:
- DE-U1- 202019 100 595
- US-A1- 2021 198 935

## Beschreibung

Die Erfindung betrifft eine Bremseinrichtung für ein antreibbares Teil nach dem Oberbegriff eines unabhängigen Anspruchs, insbesondere zum Einsatz für eine Fahrzeugtür oder eine Fahrzeugklappe, insbesondere in einem Automobil.

Aus der Praxis sind Antriebe bekannt, die antreibbare Bauteile, insbesondere um eine Schwenkachse verlagern. Hierbei liefert ein Elektromotor ein ausreichend hohes Drehmoment ab, um die von der Masse der Bauteile herrührende Last zu überwinden. Beispielsweise bei Fahrzeugklappen wie Kofferraumdeckeln verfährt der Antrieb diese aus einer Schließposition in eine geöffnete Position und zurück.

Ein automatisches Öffnen, Schließen, Halten sowie Abbremsen der Fahrzeugklappe oder der Fahrzeugtür eines Automobils mittels elektrischer Antriebe erhöht nicht nur den Komfort, sondern bietet darüber hinaus mehr Sicherheit. Einerseits können beispielsweise Heckklappen für Ladetätigkeiten per Sensor mittels einer einfachen Fußgeste berührungslos geöffnet bzw. geschlossen werden. Andererseits weisen elektrische Antriebe für Fahrzeugtüren oder Fahrzeugklappen, infolge einer Integration in eine Zentralverriegelung des Automobils, eine erhöhte Diebstahlsicherung auf.

Ferner können antriebsgesteuerte Fahrzeugtüren bzw. Fahrzeugklappen ein Hindernis zum Beispiel eine Hand, die sich zwischen einer Fahrzeugtür bzw. Fahrzeugklappe und einem Fahrzeugtürrahmen befindet, per Sensor wahrnehmen. Folglich wird die Fahrzeugtür oder die Fahrzeugklappe über den jeweiligen Antrieb abgebremst, sodass Verletzungen durch ein Einklemmen der Hand oder eines anderen Körperteils vermieden werden. Entsprechend können weitere antriebsgesteuerte Komponenten eine bevorstehende Kollision beispielsweise mit einer Wand oder mit einem anderen parkenden Automobil per Sensor erkennen, sodass während eines Öffnungsvorgangs der Fahrzeugtür bzw. Fahrzeugklappe Schäden vermieden werden, indem ein Abbremsen und Halten der Fahrzeugtür bzw. Fahrzeugklappe erfolgt.

Darüber hinaus müssen elektrische Antriebe so ausgelegt sein, um im Falle einer Neigung des Automobils die Fahrzeugtür oder die Fahrzeugklappe zu öffnen und/oder zu schließen, indem ein Motor ein ausreichend hohes Drehmoment abliefert. Ferner muss sichergestellt sein, dass die elektrischen Antriebe die geöffnete Fahrzeugtür bzw. die geöffnete Fahrzeugklappe auch in einer geneigten Position des Automobils zu halten vermögen.

Bei einem Transport von sperrigen Gütern, die in einem Kofferraum lagern, ist es ebenso vorteilhaft die Heckklappe in einer definierten Position zu arretieren, sodass eine unerwünschte selbsttätige Öffnung der Heckklappe aufgrund von Vibrationen unterbunden wird. Nachteilig bei den bekannten elektrischen Antrieben ist, dass eine ununterbrochene Bestromung des elektrischen Antriebs erforderlich ist, um die Fahrzeugtür bzw. Fahrzeugklappe in einer Zwischenposition zu halten. Dies führt zu einem hohen Energieaufwand und zu einer unnötigen Erwärmung der Antriebe sowie zu einer verkürzten Lebensdauer der Bauteile.

Ferner weisen die bekannten Antriebe häufig Rutschkupplungen auf, damit im Falle einer Störung das anzutreibende Teil händisch geöffnet oder geschlossen werden kann.

Damit Fahrzeugtüren sowie Fahrzeugklappen die vorstehenden Bedingungen erfüllen, werden elektrische Antriebe bevorzugt in Kombination mit einer Bremseinrichtung bereitgestellt, um eine Fahrzeugtür oder eine Fahrzeugklappe kontrolliert zu öffnen, zu schließen, zu halten oder während eines Bewegungsvorgangs der Fahrzeugtür oder der Fahrzeugklappe kontrolliert abzubremsen.

DE 20 2019 100 595 U1 zeigt eine Bremseinrichtung für ein antreibbares Teil, insbesondere zum Einsatz für eine Fahrzeugtür oder eine Fahrzeugklappe, insbesondere in einem Automobil. Die Bremseinrichtung umfasst eine antreibbare Belastungseinrichtung, die mit dem antreibbaren Teil radial in Kontakt bringbar ist, mit einer ersten Haltestellung und einer zweiten Freigabestellung. Einerseits liegt in der Haltestellung zumindest ein Bremsglied reibend an einem radialen Umfang des antreibbaren Teils an, sodass das antreibbare Teil gegen eine Verdrehung mit einer voreinstellbaren Kraft gesichert wird. Andererseits ist in der Freigabestellung das Bremsglied von dem radialen Umfang des antreibbaren Teils beabstandet, sodass ein Freilauf des antreibbaren Teils zugelassen wird. Die Belastungseinrichtung ist mittels eines Antriebs zwischen der Haltestellung und der Freigabestellung verstellbar. Nachteilig an der bekannten Bremseinrichtung ist, dass ein Abbremsen lediglich über einen reibenden Kontakt des zumindest einen Bremsgliedes mit dem antreibbaren Teil erfolgt. Dementsprechend ist ein exakt definiertes Bremsmoment der Bremseinrichtung auf ein antreibbares Teil weder exakt einstellbar noch ablieferbar.

US 2021/198935 A1 zeigt eine Bremseinrichtung insbesondere zum Einsatz für eine Fahrzeugtür oder eine Fahrzeugklappe, insbesondere in einem Automobil. Die Bremseinrichtung umfasst eine antreibbare Belastungseinrichtung mit einer ersten Haltestellung und einer zweiten Freigabestellung, wobei die Belastungseinrichtung mittels eines Antriebs zwischen der Haltestellung und der Freigabestellung verstellbar ist.

Es ist die Aufgabe der Erfindung, eine Bremseinrichtung zu schaffen, die zuverlässig ist und ein exaktes Bremsmoment abliefert.

Diese Aufgabe wird erfindungsgemäß durch eine Bremseinrichtung mit den Merkmalen des unabhängigen Anspruchs 1 gelöst.

Gemäß der Erfindung ist eine Bremseinrichtung für ein antreibbares Teil, insbesondere zum Einsatz für eine Fahrzeugtür oder eine Fahrzeugklappe, insbesondere in einem Automobil geschaffen. Die Bremseinrichtung umfasst eine antreibbare Belastungseinrichtung, die mit dem antreibbaren Teil radial in Kontakt bringbar ist, mit einer ersten Haltestellung und einer zweiten Freigabestellung, wobei in der Haltestellung zumindest ein Bremsglied an einem radialen Umfang des antreibbaren Teils reibend anliegt und das antreibbare Teil gegen eine Verdrehung mit einer voreinstellbaren Kraft sichert, wobei in der Freigabestellung das Bremsglied von dem radialen Umfang des antreibbaren Teils beabstandet ist und einen Freilauf des antreibbaren Teils zulässt, wobei die Belastungseinrichtung zwischen der Haltestellung und der Freigabestellung mittels eines Antriebs verstellbar ist. Die Bremseinrichtung zeichnet sich dadurch aus, dass das antreibbare Teil mit zumindest einer Permanentbremse gekoppelt ist. Vorteilhaft wird sowohl eine kurze Reaktionszeit der Bremseinrichtung bereitgestellt als auch ein exakt definiertes Bremsmoment durch eine Kombination einer Permanentbremse mit einer zuschaltbaren Bremse abgeliefert. Die Permanentbremse bietet den Vorteil, dass diese sich präzise hinsichtlich eines zu erreichenden Bremsmomentes voreinstellen lässt. Die zuschaltbare Bremse weist eine sehr kurze Reaktionszeit auf, sodass vorteilhaft durch diese Kombination die vorstehende Bremseinrichtung sowohl über ein durch die Permanentbremse exakt voreinstellbares Bremsmoment als auch über eine sehr schnelle Reaktionszeit der Belastungseinrichtung verfügt.

Gemäß der Erfindung ist das Bremsglied der Belastungseinrichtung mit einem Gehäuseabschnitt der Permanentbremse radial in Kontakt bringbar. Vorteilhaft ist ein Gehäuseabschnitt der Permanentbremse auf einer gleichen Höhe angeordnet wie das Bremsglied der Belastungseinrichtung. Infolgedessen kann das Bremsglied der Belastungseinrichtung eine Außenfläche des Gehäuseabschnitts der Permanentbremse radial packen, sodass eine Bremskraft auf den Gehäuseabschnitt wirkt, wodurch der Gehäuseabschnitt der Permanentbremse arretiert wird.

Gemäß der Erfindung wirkt in der Haltestellung ein Bremsmoment der Permanentbremse auf das antreibbare Teil. Vorteilhaft wird hierbei ein genau definiertes Bremsmoment auf das antreibbare Teil abgeliefert, welches vorab bezüglich der Permanentbremse voreingestellt wird. Darüber hinaus kann ein Bremsmoment der Permanentbremse je nach Fahrzeugmodell individuell voreingestellt werden, sodass vielseitige Einsatzmöglichkeiten hinsichtlich eines Gewichts einer Fahrzeugtür oder einer Fahrzeugklappe gewährleistet sind.

Gemäß der Erfindung ist das antreibbare Teil in der Freigabestellung mit der Permanentbremse frei drehbar. Vorteilhaft findet in der Freigabestellung keine Bremsung durch die Permanentbremse des antreibbaren Teils statt, sodass Energie eingespart wird und Bauteile nicht unnötig einem Verschleiß ausgesetzt werden, wodurch deren Lebensdauer erhöht wird. Ferner werden störende Geräusche, beispielsweise Reibgeräusche, während des Betriebs einer Fahrzeugtür bzw. Fahrzeugklappe vermieden.

Vorzugsweise umfasst das antreibbare Teil einen Schaft oder eine Spindel. Der Schaft oder die Spindel dient hauptsächlich einem Verstellen von Fahrzeugtüren bzw. Fahrzeugklappen mittels z. B. eines elektrischen Antriebs und einer entsprechenden Getriebekonfiguration. Vorteilhaft wird die Bremswirkung der Permanentbremse auf das antreibbare Teil ausschließlich in der Haltestellung abgeliefert, sodass die Permanentbremse in der Freigabestellung zusammen mit dem Schaft oder der Spindel des antreibbaren Teils, an dem die Permanentbremse angeordnet bzw. gekoppelt ist, frei drehbar ist. Vorteilhaft ist das Bremsmoment bezüglich der Permanentbremse exakt einstellbar, sodass infolge einer Zuschaltung der Bremseinrichtung ein genau definiertes sowie ein zeitlich gesteuertes bzw. geregeltes Bremsmoment abgeliefert wird.

Vorzugsweise ist das Bremsmoment der Permanentbremse einmalig einstellbar. Hierbei beträgt das Bremsmoment der Permanentbremse zweckmäßigerweise zwischen 0,2 Nm bis 3 Nm, bevorzugt zwischen 0,5 Nm bis 2 Nm und besonders bevorzugt 1 Nm. Vorteilhaft wird während der Produktion der Permanentbremse das gewünschte Bremsmoment exakt voreingestellt. Ferner ist vorteilhaft eine Voreinstellung des Bremsmoments nur einmal auszuführen, sodass nach durchgeführter Voreinstellung des Bremsmoments die Permanentbremse betriebsbereit ist.

Zweckmäßigerweise ist ein Bremsmoment der Belastungseinrichtung mindestens zweifach höher als das Bremsmoment der Permanentbremse. Vorteilhaft kann dadurch die Permanentbremse mittels des zumindest einen Bremsglieds gepackt und gehalten werden, sodass der arretierte Gehäuseabschnitt der Permanentbremse in der Haltestellung nicht durchrutscht.

Vorzugsweise ist ein Durchdrehen des antreibbaren Teils in der Art einer Rutschkupplung bei einer Überschreitung des Bremsmoments der Permanentbremse in der Haltestellung vorgesehen. Im Falle, dass das antreibbare Teil, welches mit der Permanentbremse gekoppelt ist, ein höheres Drehmoment aufweist als das Bremsmoment der Permanentbremse, rutscht das antreibbare Teil bezüglich der Permanentbremse durch. Somit kann vorteilhaft aufgrund einer integrierten Rutschkupplung bei einer Störung oder bei einem Defekt die Fahrzeugtür oder die Fahrzeugklappe händisch verstellt werden.

Zweckmäßigerweise wird in der Haltestellung der durch das Bremsglied arretierte Gehäuseabschnitt der Permanentbremse, bei einem Durchdrehen des antreibbaren Teils, unverdrehbar in Position gehalten. Vorteilhaft wird somit gewährleistet, dass ausschließlich das voreingestellte Bremsmoment der Permanentbremse auf das antreibbare Teil abgeliefert wird.

Zweckmäßigerweise ist die Belastungseinrichtung zuschaltbar. Eine zuschaltbare Belastungseinrichtung weist den Vorteil auf, dass diese nur bei Bedarf aktivierbar bzw. deaktivierbar ist, wobei vorteilhaft die Belastungseinrichtung über eine sehr kurze Reaktionszeit verfügt. Ferner kann eine zuschaltbare Belastungseinrichtung vorteilhaft computergesteuert sein sowie mit entsprechenden Sensoren gekoppelt sein. Bei einem z. B. plötzlichen Windstoß können entsprechende Sensoren ein zu schnelles Öffnen oder Schließen der jeweiligen Fahrzeugtür oder Fahrzeugklappe registrieren. Folglich werden diese Informationen von einem Computer verarbeitet, welcher mittels der Bremseinrichtung die betroffene Fahrzeugtür oder Fahrzeugklappe abbremst.

Vorzugsweise beträgt eine Reaktionszeit der Belastungseinrichtung für eine Verstellung des Bremsglieds zwischen 30 bis 100 Millisekunden, bevorzugt zwischen 40 bis 80 Millisekunden und besonders bevorzugt 60 Millisekunden. Eine schnelle Reaktionszeit der Belastungseinrichtung erhöht vorteilhaft die Betriebssicherheit des antreibbaren Teils.

Gemäß einer bevorzugten Ausgestaltung ist das antreibbare Teil koaxial bezüglich der Permanentbremse angeordnet. Auf diese Weise wird vorteilhaft das antreibbare Teil bauraumsparend mit der Permanentbremse verbunden. Ferner wird mittels des koaxialen Aufbaus stets ein zuverlässiges Bremsmoment von der Permanentbremse auf das antreibbare Teil übertragen.

Gemäß einer weiteren bevorzugten Ausgestaltung ist das antreibbare Teil konzentrisch bezüglich der Permanentbremse angeordnet. Dies bietet den Vorteil, dass miteinander gekoppelte Bauteile sehr gute Rundlaufeigenschaften aufweisen. Die entsprechenden Bauteile sind somit fluchtend, gerade, zentriert und nicht versetzt zueinander angeordnet. Dadurch wird eine gewisse Laufruhe der beweglichen Bauteile sichergestellt, was in einer erhöhten Lebensdauer sowie in einem vorteilhaft geräuscharmen Betrieb resultiert.

Vorzugsweise ist die Permanentbremse als eine Permanent-Magnet-Bremse und/oder als eine Permanent-Federdruck-Bremse ausgebildet. Es existieren verschiedene Ausführungsformen hinsichtlich einer Permanentbremse. Der Vorteil einer Permanent-Magnet-Bremse ist, dass diese zuschaltbar und regelbar ist, wobei eine Permanent-Federdruck-Bremse mittels einer Feder vorgespannt ist, die ein voreingestelltes Bremsmoment dauerhaft abliefert. Der Vorteil einer Permanent-Federdruck-Bremse ist u. a. ihr unkomplizierter Aufbau, und dass diese aufgrund des stromlosen Betriebs ausfallsicher ist, was zu einer sehr hohen Betriebssicherheit beiträgt.

Bevorzugt ist die Permanentbremse als eine Kombination aus Permanent-Magnet-Bremse und Permanent-Federdruck-Bremse ausgebildet. Vorteilhaft kann dadurch eine zuschaltbare Permanentbremse eingesetzt werden, die in einem stromlosen Zustand mittels der Feder ein voreingestelltes Bremsmoment dauerhaft abliefert. Vorteilhafterweise ist diese Ausführungsform einer Permanentbremse ausfallsicher, da diese auch stromlos ein Bremsmoment abliefert. Dementsprechend bietet die vorstehende Kombination einerseits den Vorteil der Zuschaltbarkeit und andererseits eine sehr hohe Betriebssicherheit.

Insgesamt ist es günstig, dass in der Freigabestellung ein radialer Abstand zwischen dem Gehäuseabschnitt der Permanentbremse und dem Bremsglied zwischen 0,2 bis 1,2 Millimeter, bevorzugt zwischen 0,4 bis 0,8 Millimeter und besonders bevorzugt 0,5 Millimeter beträgt. Der Vorteil des geringen Abstands von 0,5 Millimeter resultiert in der schnellen Reaktionszeit der Belastungseinrichtung, da lediglich ein kurzer Weg bezüglich des Bremsgliedes zurückgelegt werden muss, um den Gehäuseabschnitt der Permanentbremse zu kontaktieren oder entsprechend freizugeben.

Zweckmäßigerweise ist eine Bremskontaktfläche des Bremsglieds konkav ausgebildet. Dadurch, dass die Bremskontaktfläche des Bremsglieds eine konkave Form aufweist, kann sich vorteilhaft das Bremsglied bei einem Übergang von der Freigabestellung in die Haltestellung ideal an eine äußere Mantelfläche des Gehäuseabschnitts der Permanentbremse gleichmäßig anschmiegen und diese arretieren. Dementsprechend resultiert dies in einer optimalen Bremswirkung, da die gesamte Bremskontaktfläche des Bremsglieds ausgenutzt wird. Gemäß einer weiteren Ausgestaltung weist die konkave Bremskontaktfläche des Bremsglieds eine raue Reibfläche oder eine gummierte Beschichtung auf, sodass eine noch höhere Bremswirkung erreicht wird.

Gemäß einer bevorzugten Weiterbildung weist die Permanentbremse eine zylindrische oder konische oder ellipsoide oder sanduhrförmige Außengeometrie auf. Vorteilhaft bietet eine rotationssymmetrische Außengeometrie der Permanentbremse eine gleichmäßige Lastverteilung, die in einer Laufruhe sowie in sehr guten Rundlaufeigenschaften der sich drehenden Permanentbremse resultiert, da z. B. eine Unwucht vermieden wird. Ferner wird dadurch einerseits die Permanentbremse mittels des Bremsglieds ohne ein Verkanten kontaktiert und andererseits wird eine hohe Bremswirkung erzielt.

Gemäß einer bevorzugten Ausgestaltung ist der Antrieb ein Gleichstrommotor. Vorteilhaft weisen sogenannte DC-Motoren eine sehr hohe Beschleunigung auf, wobei sie über einen großen Drehzahlbereich verfügen sowie über eine hohe Lebensdauer. Des Weiteren sind DC-Motoren kompakt und klein und darüber hinaus eignen sich DC-Motoren sehr gut für präzise Positionierantriebe. Daher wird bevorzugt ein Gleichstrommotor für eine Verstellung des Bremsglieds der Bremseinrichtung eingesetzt.

Zweckmäßigerweise umfasst der Antrieb eine Welle, die in zwei Richtungen drehbar ist. Vorteilhaft ist die Welle des Antriebs entweder im Uhrzeigersinn oder im Gegenuhrzeigersinn drehbar.

Gemäß einer Ausgestaltungsvariante umfasst die Welle einen Gewindeabschnitt, der mit einer Mutter in Eingriff steht, wobei die Mutter bezüglich des Antriebs axial zwischen der ersten Haltestellung und der zweiten Freigabestellung verlagerbar ist. Vorteilhaft treibt die Welle des Antriebs mit ihrem integrierten Gewindeabschnitt direkt eine Mutter an, sodass diese aufgrund der Umschaltbarkeit der Drehrichtung der Welle entlang einer Wellenachse verlagerbar ist, wodurch eine Haltestellung bzw. eine Freigabestellung der Bremseinrichtung einstellbar ist. Ferner werden keine weiteren als Kopplungsteile ausgebildeten Komponenten für eine Verbindung der Welle mit der Mutter benötigt.

Gemäß einer weiteren alternativen Ausgestaltung ist der Antrieb ein Linearmotor oder ein Linearaktor oder ein elektromagnetischer Aktuator. Hierbei umfasst vorzugsweise der Linearmotor oder der Linearaktor oder der elektromagnetische Aktuator ein Gehäuse und einen Aktor, wobei der Aktor bezüglich eines Gehäuses axial zwischen der ersten Haltestellung und der zweiten Freigabestellung verlagerbar ist. Vorteilhaft kann die Bremseinrichtung mit einem Linearmotor bzw. einem Linearaktor ausgestattet sein, wodurch eine Montage erleichtert wird, da beispielsweise weniger Bauteile bezüglich der Bremseinrichtung anfallen. Bei einem Einsatz eines elektromagnetischen Aktuators als Antrieb nimmt ein Anker in Abhängigkeit von einer Bestromung einer integrierten Elektromagnet-Spule eine bestimmte Position ein. Der Anker ist linear hin- und herbewegbar und weist mindestens zwei Anschlagpositionen auf. Vorteilhafterweise besteht die Möglichkeit unterschiedliche Antriebe in die vorstehende Bremseinrichtung einzusetzen, sodass die Einsatzmöglichkeiten der Bremseinrichtung hinsichtlich des Einbauraums sowie des gewünschten Bremsmomentes oder des allgemeinen Bewegungsablaufs variabel sind.

Gemäß einer bevorzugten Ausgestaltung umfasst die antreibbare Belastungseinrichtung ein erstes Bremsglied und ein zweites Bremsglied, die jeweils in der Haltestellung an einem radialen Umfang des antreibbaren Teils reibend anliegen und das antreibbare Teil gegen eine Verdrehung mit einer voreinstellbaren Kraft sichern und in der Freigabestellung von dem radialen Umfang des antreibbaren Teils beabstandet sind und einen Freilauf des antreibbaren Teils zulassen, wobei das erste Bremsglied um ein erstes Schwenkgelenk mit einer ersten Schwenkachse gelenkig verschwenkbar ist, wobei das zweite Bremsglied um ein zweites Schwenkgelenk mit einer zweiten Schwenkachse gelenkig verschwenkbar ist, und wobei das antreibbare Teil zwischen dem Antrieb der Belastungseinrichtung und den beiden Schwenkachsen angeordnet ist.

Vorteilhaft sind sowohl das antreibbare Teil als auch die Permanentbremse zwischen dem Antrieb und den beiden Schwenkachsen angeordnet, sodass das erste Bremsglied und das zweite Bremsglied zangenartig einen Gehäuseabschnitt der Permanentbremse mit einer sehr hohen Bremskraft aufgrund der optimierten Hebelarmlängen packen können. Vorteilhaft bietet diese Anordnung eine kompakte Bauweise der Bremseinrichtung und die Gewährleistung einer sehr hohen Bremswirkung sowie einer sehr schnellen Reaktionszeit hinsichtlich der beiden Bremsglieder.

Gemäß einem nicht erfindungsgemäßen Aspekt ist eine Bremseinrichtung für ein antreibbares Teil. insbesondere zum Einsatz für eine Fahrzeugtür oder eine Fahrzeugklappe, insbesondere in einem Automobil, geschaffen. Die Bremseinrichtung umfasst eine antreibbare Belastungseinrichtung, die mit dem antreibbaren Teil radial in Kontakt bringbar ist, mit einer ersten Haltestellung und einer zweiten Freigabestellung, wobei in der Haltestellung ein erstes Bremsglied und ein zweites Bremsglied an einem radialen Umfang des antreibbaren Teils reibend anliegen und das antreibbare Teil gegen eine Verdrehung mit einer voreinstellbaren Kraft sichern, wobei in der Freigabestellung das erste und das zweite Bremsglied von dem radialen Umfang des antreibbaren Teils beabstandet sind und einen Freilauf des antreibbaren Teils zulassen, wobei die Belastungseinrichtung zwischen der Haltestellung und der Freigabestellung mittels eines Antriebs verstellbar ist, wobei das erste Bremsglied um ein erstes Schwenkgelenk mit einer ersten Schwenkachse gelenkig verschwenkbar ist, wobei das zweite Bremsglied um ein zweites Schwenkgelenk mit einer zweiten Schwenkachse gelenkig verschwenkbar ist. Bei der Bremseinrichtung ist das antreibbare Teil zwischen dem Antrieb der Belastungseinrichtung und den beiden Schwenkachsen angeordnet.

Vorteilhaft ist das antreibbare Teil zwischen dem Antrieb und den beiden Schwenkachsen angeordnet, sodass das erste Bremsglied und das zweite Bremsglied zangenartig das antreibbare Teil mit einer sehr hohen Bremskraft aufgrund der optimierten Hebelarmlängen packen können. Vorteilhaft bietet diese Anordnung eine kompakte Bauweise der Bremseinrichtung und die Gewährleistung einer sehr hohen Bremswirkung sowie einer sehr schnellen Reaktionszeit hinsichtlich der beiden Bremsglieder.

Zweckmäßigerweise umfasst der Antrieb einen Motor mit einer rotierbaren Welle. Ferner weist die rotierbare Welle ein Kopplungsteil auf, welches mit einem Führungsteil in Eingriff bringbar ist, wodurch das Führungsteil axial verlagerbar ist, wenn die Welle rotiert wird.

Vorzugsweise ist das Kopplungsteil als zylindrischer Gewindeabschnitt ausgebildet. Darüber hinaus ist das Führungsteil als innenverzahnte Mutter ausgebildet, die bei Drehung des Gewindeabschnitts axial bezüglich der Motors verlagert wird.

Vorteilhaft wird hierdurch eine formschlüssige Verbindung zwischen Kopplungsteil und Führungsteil geschaffen, wonach das Führungsteil mittels des Kopplungsteils antreibbar ist, wodurch eine kontrollierte Schwenkbewegung der beiden Bremsglieder ausführbar ist. Die Schwenkbewegung resultiert entweder in einer Haltestellung oder in einer Freigabestellung der Belastungseinrichtung.

Zweckmäßigerweise enthält das erste Bremsglied eine erste Einhausung für eine Aufnahme des Motors. Des Weiteren enthält vorzugsweise das zweite Bremsglied eine zweite Einhausung für eine Aufnahme des Führungsteils. Vorteilhaft sind der Motor und zumindest ein Führungsteil bereits in den beiden Bremsgliedern innerhalb der jeweiligen Einhausung integriert, sodass eine kompakte Bremsvorrichtung zur Verfügung gestellt wird.

Vorzugsweise weist das erste Bremsglied ein erstes Ende und ein zweites Ende auf, wobei das erste Schwenkgelenk an dem ersten Ende des ersten Bremsgliedes angeordnet ist, und wobei die erste Einhausung an dem zweiten Ende des ersten Bremsgliedes angeordnet ist.

Vorzugsweise weist das zweite Bremsglied ein erstes Ende und ein zweites Ende auf, wobei das zweite Schwenkgelenk an dem ersten Ende des zweiten Bremsgliedes angeordnet ist, und wobei die zweite Einhausung an dem zweiten Ende des zweiten Bremsgliedes angeordnet ist.

Vorteilhaft weisen beide Bremsglieder einerseits jeweils ein Schwenkgelenk auf und andererseits weisen beide Bremsglieder jeweils eine Einhausung auf. Dementsprechend werden das erste Bremsglied und das zweite Bremsglied bauraumtechnisch optimal ausgenutzt, wodurch eine kompakte Bremseinrichtung zur Verfügung gestellt wird. Ferner resultiert ein direkter Einbau eines Motors in einem der vorstehenden Bremsglieder in einer erhöhten Reaktionsgeschwindigkeit der Bremseinrichtung, sodass die gewünschte Bremswirkung sowie die Sicherheit der Bremseinrichtung gewährleistet sind.

Gemäß einer Weiterbildung umfassen die erste Einhausung und die zweite Einhausung jeweils einen abnehmbaren Deckel. Vorteilhaft wird mittels einer jeweiligen Abdeckung, die u. a. bevorzugt eine Dichtung aus einem Kunststoffmaterial vorsieht, das Innere der jeweiligen Einhausung vor Feuchtigkeit, Staub und anderen etwaigen Verschmutzungen geschützt. Ferner bietet ein abnehmbarer Deckel den Vorteil, dass im Falle einer Störung oder eines Defekts der Antrieb sowie das Führungsteil austauschbar bzw. reparierbar sind. Somit sind der Antrieb und das Führungsteil wiederverwendbar. Ein weiterer Vorteil einer Abdeckung ist, dass Geräusche reduziert werden, sodass ein leiser Betrieb der Bremseinrichtung möglich ist.

Vorzugsweise weisen die erste Einhausung eine erste durchgehende Durchbrechung und die zweite Einhausung eine zweite durchgehende Durchbrechung auf. Vorteilhaft sind die Durchbrechungen der jeweiligen Einhausungen z. B. für Kabeldurchführungen sowie für eine Wellendurchführung bzw. Aktordurchführung konzipiert. Die Durchbrechungen sind entsprechend ausgeführt, dass die Welle oder der Aktor eine reibungslose Bewegung ausführen kann. Ferner wird die Möglichkeit bereitgestellt, dass an einer Außenseite der Durchbrechungen bezüglich zumindest einer Kabeldurchführung eine Kabelzugentlastung sowie ein Kabelknickschutz montiert werden, um einem möglichen Kabelbruch entgegenzuwirken.

Zweckmäßigerweise ist die Welle in eine Richtung zu der zweiten Einhausung angeordnet. Vorteilhaft wird durch die vorstehende Anordnung des Antriebs eine optimale Bauraumausnutzung geschaffen.

Zweckmäßigerweise ist das Führungsteil innerhalb der zweiten Einhausung hin- und herbewegbar. Vorteilhaft wird hierdurch eine Schwenkbewegung des ersten Bremsglieds und des zweiten Bremsglieds ermöglicht, indem das Führungsteil innerhalb der zweiten Einhausung kontrolliert verlagert wird. Je nach Position des Führungsteils befindet sich die Belastungseinrichtung in der Freigabestellung oder in der Haltestellung.

Gemäß einer bevorzugten Ausgestaltung geht von dem ersten Bremsglied ein erster Materialabschnitt mit einem ersten Auge in eine Richtung zu dem zweiten Bremsglied ab. Gemäß einer weiteren bevorzugten Ausgestaltung geht von dem zweiten Bremsglied ein zweiter Materialabschnitt mit einem zweiten Auge in eine Richtung zu dem erstem Bremsglied ab. Hierbei sind vorzugsweise das erste Auge und das zweite Auge jeweils als ein Langloch ausgebildet. Des Weiteren durchsetzt zweckmäßigerweise ein Zapfen das erste Auge des ersten Materialabschnitts und/oder das zweite Auge des zweiten Materialabschnitts.

Insgesamt ist es günstig, dass der erste Materialabschnitt und der zweite Materialabschnitt überlappend angeordnet sind, wobei vorzugsweise der erste Materialabschnitt unter dem zweiten Materialabschnitt angeordnet ist.

Vorteilhaft wird durch eine scherenartige Anordnung der beiden Materialabschnitte ein Bauraum optimal ausgenutzt, um eine kompakte Bremseinrichtung zur Verfügung zu stellen.

Zweckmäßigerweise ist der Zapfen ein Endanschlag bezüglich des ersten Bremsgliedes und des zweiten Bremsgliedes. Vorteilhaft gehen von beiden Bremsgliedern jeweils ein flacher Materialabschnitt mit einem jeweiligen Langloch ab. Dadurch, dass ein Zapfen die beiden als Langlöcher ausgebildeten Durchbrechungen durchsetzt, wird die Verschwenkbarkeit der Bremsglieder eingeschränkt, indem der Zapfen als ein Endanschlag fungiert. Der Vorteil ist, dass bei einer Störung oder bei einem Defekt die beiden Bremsglieder nicht außerhalb eines vorgesehenen Bereichs verschwenkbar bzw. verlagerbar sind. Der als Zapfen ausgebildete Endanschlag blockiert eine weitere ungewünschte Verschwenkung des ersten und des zweiten Bremsgliedes sowohl in der Haltestellung als auch in der Freigabestellung. Auf diese Art und Weise wird die Betriebssicherheit der Bremseinrichtung zuverlässig gewährleistet.

Gemäß einer bevorzugten Ausgestaltung sind das erste Bremsglied und das zweite Bremsglied jeweils aus zumindest einem Kunststoff mittels eines Spritzgussverfahrens hergestellt. Vorteilhaft können mittels eines Spritzgussverfahrens Kunststoffteile in hoher Menge zügig sowie wirtschaftlich produziert werden. Ein weiterer Vorteil ist, dass Kunststoffteile allgemein aufgrund ihrer Dichteeigenschaften ein geringeres Gewicht aufweisen als gleiche Bauteile aus z. B. metallischen Materialien. Ferner können die Bremsglieder, die als Kunststoffteile hergestellt sind, mittels eines z. B. Doppelspritzgussverfahrens mehrere Kunststoffmaterialien umfassen. Vorteilhaft weist somit ein Bremsglied mindestens zwei unterschiedliche Kunststoffmaterialien auf. Das Bremsglied ist somit aus einem primären Kunststoff hergestellt, wobei beispielsweise in dem konkaven Kontaktbereich des Bremsgliedes ein weiterer gummiartiger Kunststoff mit einer Reibfläche angeordnet ist, um die Reibungskraft bzw. die Haltekraft bzw. die Bremskraft zwischen der Permanentbremse oder des antreibbaren Teils und dem Bremsglied zu erhöhen.

Insgesamt ist es günstig, dass das erste Bremsglied und das zweite Bremsglied synchron verschwenkbar sind. Vorteilhaft wird hiermit eine gleichmäßige Bremskraft auf das antreibbare Teil übertragen. Dies führt zu einer maximalen Bremswirkung, zu einem geräuscharmen Betrieb der Bremseinrichtung sowie zu einer erhöhten Lebensdauer der Bauteile.

Weitere Vorteile, Eigenschaften, Merkmale und Weiterbildungen der Erfindung ergeben sich aus der nachfolgenden Beschreibung eines bevorzugten Ausführungsbeispiels sowie aus den abhängigen Ansprüchen.

Die Erfindung wird nachstehend unter Bezugnahme auf die anliegenden Zeichnungen näher erläutert.
- Fig. 1: zeigt eine perspektivische schematische Ansicht der erfindungsgemäßen Bremseinrichtung von oben.
- Fig. 2: zeigt eine Draufsicht der Bremseinrichtung aus Fig. 1 in der Haltestellung.
- Fig. 3: zeigt eine Draufsicht der Bremseinrichtung aus Fig. 1 in der Freigabestellung.

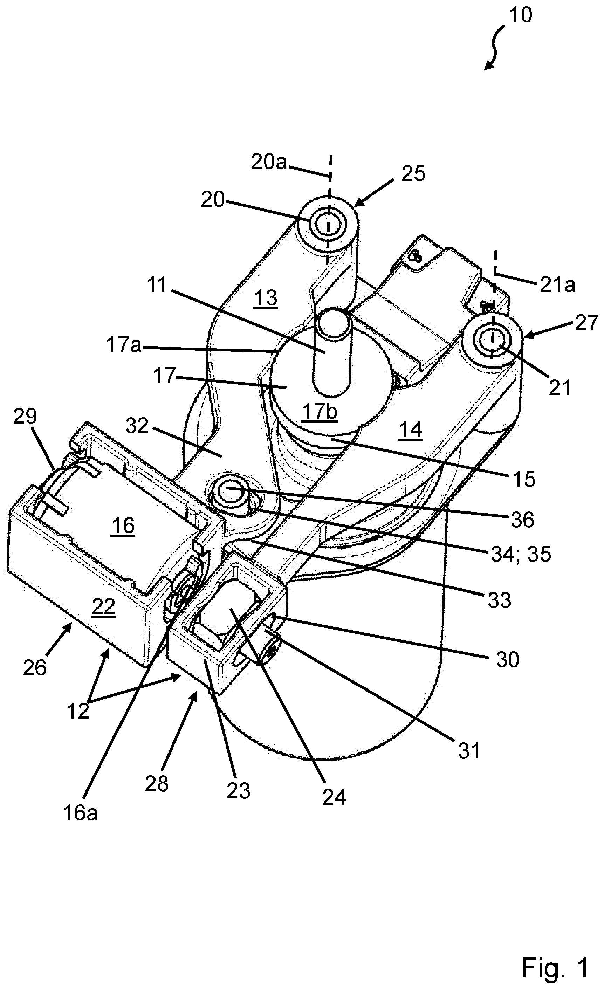

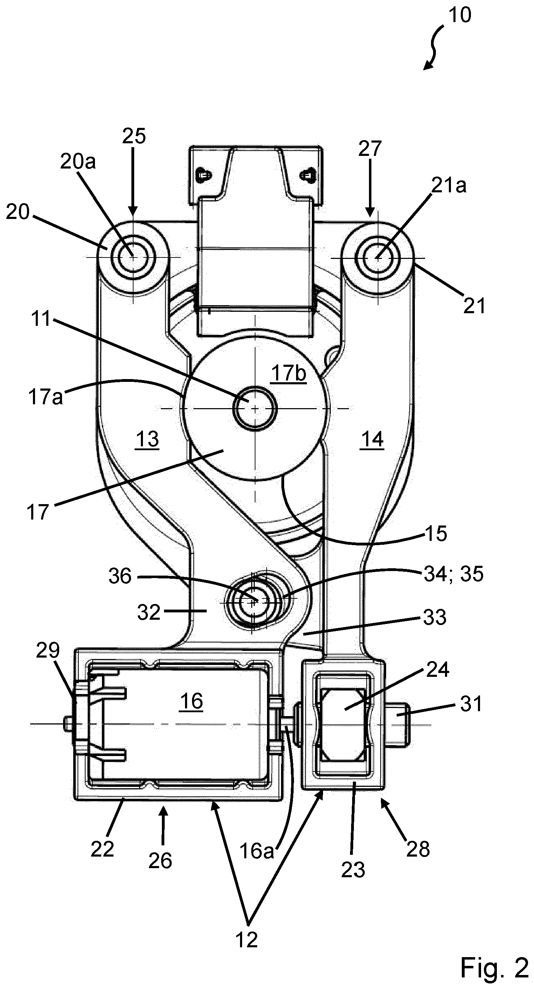

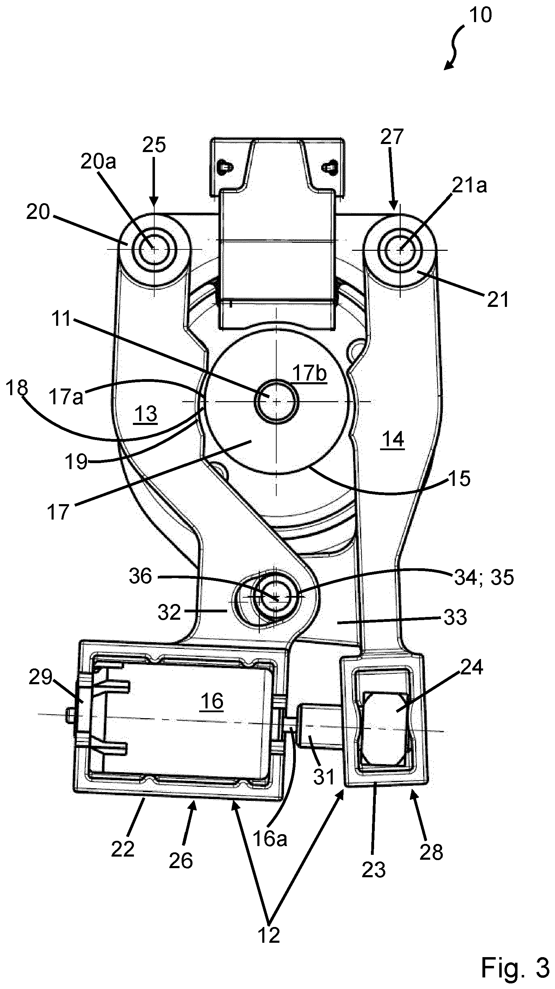

Fig. 1 zeigt schematisch eine Bremseinrichtung 10 für ein antreibbares Teil 11 in einer perspektivischen Ansicht von oben. Die Bremseinrichtung 10 umfasst eine elektrisch angetriebene, zuschaltbare Belastungseinrichtung 12 mit einem ersten Bremsglied 13 und mit einem zweiten Bremsglied 14 sowie eine bezüglich eines Bremsmoments voreinstellbare Permanentbremse 17. Die Belastungseinrichtung 12 weist im Wesentlichen zwei Funktionen auf, nämlich eine erste Haltestellung gemäß Fig. 1 sowie Fig. 2 und eine zweite Freigabestellung gemäß Fig. 3. Das antreibbare Teil 11, welches in Fig. 1 aus Gründen der Übersichtlichkeit nicht gänzlich dargestellt ist, umfasst einen Abschnitt, der mit der Permanentbremse 17, beispielsweise mittels einer formschlüssigen Welle-Nabe-Verbindung, gekoppelt ist. Dementsprechend sind in der Freigabestellung das antreibbare Teil 11 gemeinsam mit der Permanentbremse 17 frei drehbar. In der Fig. 1 ist ein Gehäuseabschnitt 17a der Permanentbremse 17 in der Haltestellung gezeigt. In der Haltestellung, die auch in Fig. 2 gezeigt ist, umgreifen das erste Bremsglied 13 und das zweite Bremsglied 14 der Belastungseinrichtung 12 zangenartig eine radiale äußere Mantelfläche des Gehäuseabschnitts 17a der Permanentbremse 17. Um eine bessere Haftung sowie eine höhere Bremswirkung seitens der Belastungseinrichtung 12 zu erzielen, weisen das erste Bremsglied 13 und das zweite Bremsglied 14 eine konkave Bremskontaktfläche 19 auf, die in Fig. 3 gezeigt ist, deren Radius mit einem Außenradius des Gehäuseabschnitts 17a der Permanentbremse 17 korrespondiert. Ferner können die beiden konkaven Bremskontaktflächen 19 jeweils eine Kunststoffbeschichtung z. B. aus einem gummiartigen Material aufweisen.

In der Haltestellung befindet sich der Gehäuseabschnitt 17a der Permanentbremse 17 in einem arretierten Zustand. Folglich wird jegliche weitere Drehung des Gehäuseabschnitts 17a der Permanentbremse 17 unterbunden. Auf das antreibbare Teil 11 wirkt nunmehr ein exakt voreingestelltes Bremsmoment, welches ausschließlich von der Permanentbremse 17 abgeliefert wird. Hierbei ist es allerdings notwendig, dass das Bremsmoment der Belastungseinrichtung 12 einem etwa zweifach höheren Wert entspricht als das voreingestellte Bremsmoment der Permanentbremse 17. Auf diese Art und Weise wird verhindert, dass der arretierte Gehäuseabschnitt 17a der Permanentbremse 17 in der Haltestellung zwischen dem ersten Bremsglied 13 und dem zweiten Bremsglied 14 durchrutscht. Um wiederum in die Freigabestellung, die in Fig. 3 gezeigt ist, zu gelangen, sind das erste Bremsglied 13 und das zweite Bremsglied 14 von dem Gehäuseabschnitt 17a der Permanentbremse 17 mit einem radialen Abstand 18 von etwa 0,5 mm beabstandet gehalten. Vorteilhafterweise beträgt die Zuschaltung bzw. die Abschaltung der Belastungseinrichtung 12 nur etwa 60 Millisekunden, sodass eine sehr hohe Betriebssicherheit aufgrund der geringen Reaktionszeit gewährleistet ist.

Das erste Bremsglied 13 umfasst ein erstes Ende 25 und ein gegenüberliegendes zweites Ende 26, wobei das zweite Ende 26 des ersten Bremsgliedes 13 als eine erste Einhausung 22 für eine Aufnahme eines Antriebs 16, insbesondere eines Gleichstrommotors bzw. DC-Motors ausgebildet ist. Das erste Ende 25 des ersten Bremsgliedes 13 weist einen Bereich auf, in dem eine erste Aussparung für eine Verbindung eines ersten Schwenkgelenks 20 angeordnet ist.

Das zweite Bremsglied 14 umfasst ein erstes Ende 27 und ein gegenüberliegendes zweites Ende 28, wobei das zweite Ende 28 des zweiten Bremsgliedes 14 als eine zweite Einhausung 23 für eine Aufnahme zumindest eines Führungsteils 24, z. B. einer Schraubenmutter 24 ausgebildet ist. Das erste Ende 27 des zweiten Bremsgliedes 14 weist einen Bereich auf, in dem eine zweite Aussparung für eine Verbindung eines zweiten Schwenkgelenks 21 angeordnet ist.

In der ersten Einhausung 22 des ersten Bremsglieds 13 ist ein Gleichstrommotor bzw. ein DC-Motor mit einer rotierbaren Welle 16a in eine Richtung zu der zweiten Einhausung 23 des zweiten Bremsglieds 14 eingesetzt. Die zweite Einhausung 23 umfasst zumindest ein einsetzbares Führungsteil 24, welches innerhalb der zweiten Einhausung 23 hin und herbewegbar ist. Das Führungsteil 24 ist eine Schraubenmutter 24.

An die Welle 16a des DC-Motors ist ein Kopplungsteil 31 angeordnet, welches ein Außengewinde aufweist. Dadurch, dass die erste Einhausung 22 und die zweite Einhausung 23 eine erste stirnseitige durchgehende Durchbrechung 29 und eine zweite durchgehende Durchbrechung 30 aufweisen, ist das Kopplungsteil 31 mit der Schraubenmutter 24 gekoppelt, indem das Kopplungsteil 31 die Schraubenmutter 24 sowie die zweite Durchbrechung 30 durchsetzt. Hierfür weisen das Kopplungsteil 31 und die Schraubenmutter 24 jeweils ein korrespondierendes Innengewinde bzw. Außengewinde auf, wodurch eine Schraubverbindung vorliegt.

Damit nun die Belastungseinrichtung 12 in die Haltestellung verfährt, treibt die rotierende Welle 16a das Kopplungsteil 31 innerhalb der Schraubenmutter 24 an, sodass die erste Einhausung 22 und die zweite Einhausung 23 sich zueinander annähern bis der Gehäuseabschnitt 17a der Permanentbremse 17 mittels des ersten Bremsgliedes 13 und des zweiten Bremsgliedes 14 radial in einem Bereich der Bremskontaktfläche 19 gepackt wird.

Um wiederum in die Freigabestellung gemäß Fig. 3 der Belastungseinrichtung 12 zu gelangen, treibt die rotierende Welle 16a das Kopplungsteil 31 in eine entgegengesetzte Richtung innerhalb der Schraubenmutter 24 an, sodass die erste Einhausung 22 und die zweite Einhausung 23 sich voneinander entfernen bis der Gehäuseabschnitt 17a der Permanentbremse 17 mittels des ersten Bremsgliedes 13 und des zweiten Bremsgliedes 14 vollständig freigegeben wird.

Die zweite Einhausung 23 fungiert als eine Art Widerlager für die eingesetzte Schraubenmutter 24, wobei die zweite durchgehende Durchbrechung 30 langlochartig ausgebildet ist, um ein Hin- und Herbewegen des Führungsteils 24 zusammen mit dem Kopplungsteil 31 innerhalb der zweiten Einhausung 23 zu gewährleisten.

Anstelle eines Motors mit einer rotierbaren Welle 16a kommt ein Linearmotor oder ein Linearaktor mit einem sich linear bewegenden Kopplungsteil 31 in Betracht, welches mit einem gegenüberliegenden Führungsteil 24 koppelbar ist. Das Führungsteil 24 umfasst im Falle einer linearen Bewegung des Kopplungsteils 31 beispielsweise ein gelenkartiges Verbindungselement.

Ein Endanschlag der Bremseinrichtung 10 ist benachbart zu der ersten Einhausung 22 des ersten Bremsglieds 13 sowie benachbart zu der zweiten Einhausung 23 des zweiten Bremsglieds 14 angeordnet. Von dem ersten Bremsglied 13 geht ein erster flacher Materialabschnitt 32 mit einem ersten als Langloch ausgebildeten Auge 34 in eine Richtung zu dem zweiten Bremsglied 14 ab. Von dem zweiten Bremsglied 14 geht ein zweiter flacher Materialabschnitt 33 mit einem zweiten als Langloch ausgebildeten Auge 35 in eine Richtung zu dem ersten Bremsglied 13 ab. Der erste Materialabschnitt 32 und der zweite Materialabschnitt 33 sind hierbei überlappend angeordnet, wobei ein Zapfen 36 das erste Auge 34 und das zweite Auge 35 durchsetzt. Hierbei fungiert der Zapfen 36 als ein Endanschlag, der die Schwenkbewegung des ersten Bremsgliedes 13 und des zweiten Bremsgliedes 14 sowohl in eine Richtung hin zu der Haltestellung beschränkt als auch in eine Richtung hin zu der Freigabestellung beschränkt.

Des Weiteren umfassen die erste Einhausung 22 des ersten Bremsglieds 13 und die zweite Einhausung 23 des zweiten Bremsglieds 14 jeweils einen abnehmbaren Deckel, der beispielsweise geclipst, gesteckt oder angeschraubt wird. Aufgrund der Übersichtlichkeit ist in den vorgestellten Figuren kein Deckel gezeigt. Die Abdeckungen der jeweiligen Einhausungen 22; 23 weisen ferner jeweils eine Abdichtung auf, die den Inhalt der Einhausungen 22; 23 vor Feuchtigkeit, Staub, Schmutz oder anderen unerwünschten Komponenten schützen. Darüber hinaus umfasst die erste Einhausung 22 eine Kabelzugentlastung sowie einen Kabelknickschutz, um die Lebensdauer der Kabel des elektrischen Antriebs zu erhöhen.

Aus Gründen der Wirtschaftlichkeit, des Gewichts, aber auch wegen der elektrischen Isolierung werden das erste Bremsglied 13 und das zweite Bremsglied 14 aus zumindest einem Kunststoffmaterial mittels eines Spritzgussverfahrens hergestellt. Ferner bietet ein Einsatz von Kunststoffmaterialien für die vorstehende Bremseinrichtung 10 ein reduziertes Geräuschniveau während des Betriebs.

## Patentansprüche

1. Bremseinrichtung für ein antreibbares Teil (11), insbesondere zum Einsatz für eine Fahrzeugtür oder eine Fahrzeugklappe, insbesondere in einem Automobil, umfassend
eine antreibbare Belastungseinrichtung (12), die mit dem antreibbaren Teil (11) radial in Kontakt bringbar ist, mit einer ersten Haltestellung und einer zweiten Freigabestellung,
wobei in der Haltestellung zumindest ein Bremsglied (13; 14) an einem radialen Umfang (15) des antreibbaren Teils (11) reibend anliegt und das antreibbare Teil (11) gegen eine Verdrehung mit einer voreinstellbaren Kraft sichert,
wobei in der Freigabestellung das Bremsglied (13; 14) von dem radialen Umfang (15) des antreibbaren Teils (11) beabstandet ist und einen Freilauf des antreibbaren Teils (11) zulässt,
wobei die Belastungseinrichtung (12) zwischen der Haltestellung und der Freigabestellung mittels eines Antriebs (16) verstellbar ist,
**dadurch gekennzeichnet,**
**dass** das antreibbare Teil (11) mit zumindest einer Permanentbremse (17) gekoppelt ist,
**dass** das Bremsglied (13; 14) der Belastungseinrichtung (12) mit einem Gehäuseabschnitt (17a) der Permanentbremse (17) radial in Kontakt bringbar ist,
**dass** in der Haltestellung ein Bremsmoment der Permanentbremse (17) auf das antreibbare Teil (11) wirkt, und
**dass** das antreibbare Teil (11) in der Freigabestellung mit der Permanentbremse (17) frei drehbar ist.

2. Bremseinrichtung nach Anspruch 1, **dadurch gekennzeichnet, dass** das antreibbare Teil (11) einen Schaft oder eine Spindel umfasst.

3. Bremseinrichtung nach Anspruch 1 oder 2, **dadurch gekennzeichnet, dass** das Bremsmoment der Permanentbremse (17) zwischen 0,2 Nm bis 3 Nm, bevorzugt zwischen 0,5 Nm bis 2 Nm und besonders bevorzugt 1 Nm beträgt.

4. Bremseinrichtung nach einem der Ansprüche 1 bis 3, **dadurch gekennzeichnet, dass** ein Bremsmoment der Belastungseinrichtung (12) mindestens zweifach höher als das Bremsmoment der Permanentbremse (17) ist.

5. Bremseinrichtung nach einem der Ansprüche 1 bis 4, **dadurch gekennzeichnet, dass** die Belastungseinrichtung (12) zuschaltbar ist.

6. Bremseinrichtung nach einem der Ansprüche 1 bis 5, **dadurch gekennzeichnet, dass** das antreibbare Teil (11) konzentrisch und/oder koaxial bezüglich der Permanentbremse (17) angeordnet ist.

7. Bremseinrichtung nach einem der Ansprüche 1 bis 6, **dadurch gekennzeichnet, dass** die Permanentbremse (17) als eine Permanent-Magnet-Bremse und/oder als eine Permanent-Federdruck-Bremse ausgebildet ist.

8. Bremseinrichtung nach einem der Ansprüche 1 bis 7, **dadurch gekennzeichnet, dass** ein Durchdrehen des antreibbaren Teils (11) in der Art einer Rutschkupplung bei einer Überschreitung des Bremsmoments der Permanentbremse (17) in der Haltestellung vorgesehen ist.

9. Bremseinrichtung nach einem der Ansprüche 1 bis 8, **dadurch gekennzeichnet, dass** in der Haltestellung der durch das Bremsglied (13; 14) arretierte Gehäuseabschnitt (17a) der Permanentbremse (17), bei einem Durchdrehen des antreibbaren Teils (11), unverdrehbar in Position gehalten wird.

10. Bremseinrichtung nach einem der Ansprüche 1 bis 9, **dadurch gekennzeichnet, dass** in der Freigabestellung ein radialer Abstand (18) zwischen dem Gehäuseabschnitt (17a) der Permanentbremse (17) und dem Bremsglied (13; 14) zwischen 0,2 bis 1,2 Millimeter, bevorzugt zwischen 0,4 bis 0,8 Millimeter und besonders bevorzugt 0,5 Millimeter beträgt.

11. Bremseinrichtung nach einem der Ansprüche 1 bis 10, **dadurch gekennzeichnet, dass** eine Bremskontaktfläche (19) des Bremsglieds (13; 14) konkav ausgebildet ist.

12. Bremseinrichtung nach einem der Ansprüche 1 bis 11, **dadurch gekennzeichnet, dass** die Permanentbremse (17) eine zylindrische oder konische oder ellipsoide oder sanduhrförmige Außengeometrie aufweist.

13. Bremseinrichtung nach einem der Ansprüche 1 bis 12, **dadurch gekennzeichnet, dass** der Antrieb (16) ein Gleichstrommotor ist, und dass der Antrieb (16) eine Welle (16a) umfasst, die in zwei Richtungen drehbar ist.

14. Bremseinrichtung nach einem der Ansprüche 1 bis 12, **dadurch gekennzeichnet, dass** der Antrieb (16) ein Linearmotor oder ein Linearaktor oder ein elektromagnetischer Aktuator ist.

15. Bremseinrichtung nach einem der Ansprüche 1 bis 14, **dadurch gekennzeichnet, dass** die antreibbare Belastungseinrichtung (12) ein erstes Bremsglied (13) und ein zweites Bremsglied (14) umfasst, die jeweils in der Haltestellung an einem radialen Umfang (15) des antreibbaren Teils (11) reibend anliegen und das antreibbare Teil (11) gegen eine Verdrehung mit einer voreinstellbaren Kraft sichern und in der Freigabestellung von dem radialen Umfang (15) des antreibbaren Teils (11) beabstandet sind und einen Freilauf des antreibbaren Teils (11) zulassen, wobei das erste Bremsglied (13) um ein erstes Schwenkgelenk (20) mit einer ersten Schwenkachse (20a) gelenkig verschwenkbar ist, wobei das zweite Bremsglied (14) um ein zweites Schwenkgelenk (21) mit einer zweiten Schwenkachse (21a) gelenkig verschwenkbar ist, und wobei das antreibbare Teil (11) zwischen dem Antrieb (16) der Belastungseinrichtung (12) und den beiden Schwenkachsen (20a; 21a) angeordnet ist.

## Claims

1. Braking device for a driveable part (11), in particular for use for a vehicle door or a vehicle flap, in particular in an automobile, comprising
a driveable loading device (12) which can be brought into radial contact with the driveable part (11), with a first holding position and a second releasing position,
wherein in the holding position at least one braking member (13; 14) bears frictionally against a radial circumference (15) of the driveable part (11) and secures the driveable part (11) against rotation with a pre-settable force,
wherein in the releasing position the braking member (13; 14) is spaced from the radial circumference (15) of the driveable part (11) and permits a freewheeling of the driveable part (11),
wherein the loading device (12) is adjustable between the holding position and the releasing position by means of a drive (16),
**characterized in**
**that** the driveable part (11) is coupled to at least one permanent brake (17),
**that** the braking member (13; 14) of the loading device (12) can be brought into radial contact with a housing portion (17a) of the permanent brake (17),
**that** in the holding position a braking torque of the permanent brake (17) acts on the driveable part (11), and
**that** in the releasing position the driveable part (11) is freely rotatable with the permanent brake (17).

2. Braking device according to claim 1, **characterized in that** the driveable part (11) comprises a shaft or a spindle.

3. Braking device according to claim 1 or 2, **characterized in that** the braking torque of the permanent brake (17) is between 0.2 **Nm** and 3 **Nm,** preferably between 0.5 **Nm** and 2 **Nm,** and particularly preferably 1 Nm.

4. Braking device according to any of claims 1 to 3, **characterized in that** a braking torque of the loading device (12) is at least twice as high as the braking torque of the permanent brake (17).

5. Braking device according to any of claims 1 to 4, **characterized in that** the loading device (12) is switchable.

6. Braking device according to any of claims 1 to 5, **characterized in that** the driveable part (11) is arranged concentrically and/or coaxially with respect to the permanent brake (17).

7. Braking device according to any of claims 1 to 6, **characterized in that** the permanent brake (17) is configured as a permanent magnet brake and/or as a permanent spring-loaded brake.

8. Braking device according to any of claims 1 to 7, **characterized in that** an overrunning of the driveable part (11) in the manner of a slipping clutch is provided when the braking torque of the permanent brake (17) is exceeded in the holding position.

9. Braking device according to any of claims 1 to 8, **characterized in that** in the holding position the housing portion (17a) of the permanent brake (17) which is retained by the braking member (13; 14) is held in position in a non-rotatable manner upon overrunning of the driveable part (11).

10. Braking device according to any of claims 1 to 9, **characterized in that** in the releasing position a radial distance (18) between the housing portion (17a) of the permanent brake (17) and the braking member (13; 14) is between 0.2 and 1.2 millimeters, preferably between 0.4 and 0.8 millimeters and particularly preferably 0.5 millimeters.

11. Braking device according to any of claims 1 to 10, **characterized in that** a braking contact surface (19) of the braking member (13; 14) is concave.

12. Braking device according to any of claims 1 to 11, **characterized in that** the permanent brake (17) has a cylindrical or conical or ellipsoidal or hourglass-shaped external geometry.

13. Braking device according to any of claims 1 to 12, **characterized in that** the drive (16) is a direct current motor, and that the drive (16) comprises a shaft (16a) which is rotatable in two directions.

14. Braking device according to any of claims 1 to 12, **characterized in that** the drive (16) is a linear motor or a linear actuator or an electromagnetic actuator.

15. Braking device according to any of claims 1 to 14, **characterized in that** the driveable loading device (12) comprises a first braking member (13) and a second braking member (14) each of which in the holding position bear frictionally against a radial circumference (15) of the driveable part (11) and secure the driveable part (11) against rotation with a pre-settable force and in the releasing position are spaced from the radial circumference (15) of the driveable part (11) and permit a freewheeling of the driveable part (11), wherein the first braking member (13) is pivotable in an articulated manner about a first pivot joint (20) with a first pivot axis (20a), wherein the second braking member (14) is pivotable in an articulated manner about a second pivot joint (21) with a second pivot axis (21a), and wherein the driveable part (11) is arranged between the drive (16) of the loading device (12) and the two pivot axes (20a; 21a).

## Revendications

1. Dispositif de freinage pour une pièce entraînable (11), en particulier destiné à être utilisé pour une porte ou un volet de véhicule, en particulier dans une automobile, comprenant
un dispositif de charge entraînable (12) qui peut être mis en contact radialement avec la pièce entraînable (11), avec une première position d'arrêt et une deuxième position de libération,
dans lequel, dans la position d'arrêt, au moins un élément de freinage (13 ; 14) repose par frottement sur une circonférence radiale (15) de la pièce entraînable (11) et bloque la pièce entraînable (11) contre une rotation avec une force préréglable,
dans lequel, dans la position de libération, l'élément de freinage (13 ; 14) est écarté de la circonférence radiale (15) de la pièce entraînable (11) et permet une rotation libre de la pièce entraînable (11),
le dispositif de charge (12) pouvant être réglé entre la position d'arrêt et la position de libération au moyen d'un entraînement (16),
**caractérisé en ce**
**que** la pièce entraînable (11) est couplée à au moins un frein permanent (17),
**que** l'élément de freinage (13 ; 14) du dispositif de charge (12) peut être mis en contact radialement avec une partie de boîtier (17a) du frein permanent (17),
**qu'**en position d'arrêt, un couple de freinage du frein permanent (17) agit sur la pièce entraînable (11), et
**qu'**en position de libération, la pièce entraînable (11) peut tourner librement avec le frein permanent (17).

2. Dispositif de freinage selon la revendication 1, **caractérisé en ce que** la pièce entraînable (11) comprend un arbre ou une broche.

3. Dispositif de freinage selon la revendication 1 ou 2, **caractérisé en ce que** le couple de freinage du frein permanent (17) est compris entre 0,2 Nm et 3 Nm, de préférence entre 0,5 Nm et 2 Nm et de manière particulièrement préférée est de 1 Nm.

4. Dispositif de freinage selon l'une des revendications 1 à 3, **caractérisé en ce que** le couple de freinage du dispositif de charge (12) est au moins deux fois plus élevé que le couple de freinage du frein permanent (17).

5. Dispositif de freinage selon l'une des revendications 1 à 4, **caractérisé en ce que** le dispositif de charge (12) peut être activé.

6. Dispositif de freinage selon l'une des revendications 1 à 5, **caractérisé en ce que** la pièce entraînable (11) est disposée de manière concentrique et/ou coaxiale par rapport au frein permanent (17).

7. Dispositif de freinage selon l'une des revendications 1 à 6, **caractérisé en ce que** le frein permanent (17) est conçu comme un frein à aimant permanent et/ou comme un frein à pression de ressort permanent.

8. Dispositif de freinage selon l'une des revendications 1 à 7, **caractérisé en ce qu'**un patinage de la pièce entraînable (11) à la manière d'un accouplement à friction est prévu en cas de dépassement du couple de freinage du frein permanent (17) en position d'arrêt.

9. Dispositif de freinage selon l'une des revendications 1 à 8, **caractérisé en ce que**, dans la position d'arrêt, la partie de boîtier (17a) du frein permanent (17) bloquée par l'élément de freinage (13 ; 14) est maintenue en position sans pouvoir tourner en cas de patinage de la pièce entraînable (11).

10. Dispositif de freinage selon l'une des revendications 1 à 9, **caractérisé en ce que**, dans la position de libération, une distance radiale (18) entre la partie de boîtier (17a) du frein permanent (17) et l'élément de freinage (13 ; 14) est comprise entre 0,2 et 1,2 millimètre, de préférence entre 0,4 et 0,8 millimètre et de manière particulièrement préférée est de 0,5 millimètre.

11. Dispositif de freinage selon l'une des revendications 1 à 10, **caractérisé en ce qu'**une surface de contact de freinage (19) de l'élément de freinage (13 ; 14) est de forme concave.

12. Dispositif de freinage selon l'une des revendications 1 à 11, **caractérisé en ce que** le frein permanent (17) présente une géométrie extérieure cylindrique, conique, ellipsoïdale ou en forme de sablier.

13. Dispositif de freinage selon l'une des revendications 1 à 12, **caractérisé en ce que** l'entraînement (16) est un moteur à courant continu et que l'entraînement (16) comprend un arbre (16a) qui peut tourner dans deux directions.

14. Dispositif de freinage selon l'une des revendications 1 à 12, **caractérisé en ce que** l'entraînement (16) est un moteur linéaire ou un actionneur linéaire ou un actionneur électromagnétique.

15. Dispositif de freinage selon l'une des revendications 1 à 14, **caractérisé en ce que** le dispositif de charge entraînable (12) comprend un premier élément de freinage (13) et un deuxième élément de freinage (14) qui, dans la position d'arrêt, s'appuient respectivement par friction contre une circonférence radiale (15) de la pièce entraînable (11) en frottement et bloquent la pièce entraînable (11) contre une rotation avec une force préréglable et sont espacés de la circonférence radiale (15) de la pièce entraînable (11) dans la position de libération et permettent une rotation libre de la pièce entraînable (11), le premier élément de freinage (13) pouvant pivoter de manière articulée autour d'une première articulation pivotante (20) avec un premier axe de pivotement (20a), le deuxième élément de freinage (14) pouvant pivoter de manière articulée autour d'une deuxième articulation pivotante (21) avec un deuxième axe de pivotement (21a), et la pièce entraînable (11) étant disposé entre l'entraînement (16) du dispositif de charge (12) et les deux axes de pivotement (20a ; 21a).
